# EUROPÄISCHE PATENTSCHRIFT

(11) **EP 1 853 459 B1**
(45) Veröffentlichungstag und Bekanntmachung des Hinweises auf die Patenterteilung: **01.06.2011**
(21) Anmeldenummer: 05801430.9
(22) Anmeldetag: 26.10.2005
(51) Int. Cl.: B60N 3/10, B60P 3/32, F25D 23/12, F25D 23/10, F24C 15/18

(54) **EINRICHTUNGSGEGENSTAND FÜR EINE KÜCHE ODER EINEN KÜCHENBEREICH**
INSTALLATION ASSEMBLY FOR KITCHEN OR KITCHEN AREA
ENSEMBLE D'INSTALLATION POUR UNE CUISINE OU UNE ZONE DE CUISINE

(30) Priorität: 28.02.2005 DE 202005003359 U
(43) Veröffentlichungstag der Anmeldung: 14.11.2007
(73) Patentinhaber: Dometic GmbH, 57074 Siegen (DE)
(72) Erfinder: LOREK, Manfred, 57074 Siegen (DE); KINSCHER, Joachim, 57234 Wilnsdorf (DE)
(74) Vertreter: GROSSE SCHUMACHER KNAUER VON HIRSCHHAUSEN
(86) Internationale Anmeldenummer: PCT/EP2005/011470
(87) Internationale Veröffentlichungsnummer: WO 2006/092162

(56) Entgegenhaltungen:
- EP-A- 0 373 397
- EP-A- 0 877 207
- DE-A1- 3 843 040
- DE-A1- 19 630 732
- DE-U1- 20 004 048
- US-A- 5 782 105
- US-A1- 2002 078 695

## Beschreibung

Die Erfindung betrifft einen Einrichtungsgegenstand für eine Küche oder einen Küchenbereich, insbesondere für eine Küche bzw. einen Küchenbereich eines Freizeitfahrzeugs.

Herkömmliche Küchenausstattungen von Freizeitfahrzeugen, insbesondere die technischen Einrichtungsgegenstände, werden als einzelne Geräte zur Verfügung gestellt und an geeigneter Stelle in einen Küchenbereich eines Freizeitfahrzeugs eingebaut. Beim Einbau werden die Geräte jeweils im Küchenbereich angeordnet und an die erforderlichen Versorgungsleitungen angeschlossen. Entsprechende Versorgungsanschlüsse müssen vorher im Freizeitfahrzeug in ausreichender Anzahl derart angeordnet werden, dass bei der vorgesehenen Anordnung der einzelnen Geräte jedes mit der benötigten Energie, beispielsweise Strom und/oder Gas, versorgt werden kann. Dies bedingt einen gesteigerten Aufwand bei der Innenausstattung des Freizeitfahrzeugs. Zudem ist der Einbau relativ aufwändig, da für jedes Gerät Anschlüsse erforderlich sind und jedes Gerät einzeln angeschlossen wird.

Neben den Anschlüssen muss wenigstens die Rückseite jedes der Geräte (insbesondere des Ofens und des Kühlschranks) zur Wand des Freizeitfahrzeugs hin separat abgedichtet werden.

Eine Einrichtungsgegenstand gemäß dem Oberbegriff von Anspruch 1 ist aus DE3843040 bekannt.

Ausgehend davon ist es eine Aufgabe der vorliegenden Erfindung, ein verbessertes Konzept zum Einbau von Küchengeräten in eine Küche oder einen Küchenbereich, insbesondere für eine Küche bzw. einen Küchenbereich eines Freizeitfahrzeugs, bereitzustellen.

Diese Aufgabe wird gelöst durch einen Einrichtungsgegenstand gemäß dem Anspruch 1.

Der erfindungsgemäße Einrichtungsgegenstand für eine Küche oder einen Küchenbereich, insbesondere für eine Küche bzw. einen Küchenbereich eines Freizeitfahrzeugs, bildet eine Einheit, die wenigstens zwei technische Geräte umfasst.

Als technische Geräte kommen insbesondere Kühlschränke, Gefriereinheiten, Öfen, Mikrowellenherde, aber auch Geschirrspülmaschinen u. ä. in Frage. Die wichtigsten technischen Komponenten, die in einem Freizeitfahrzeug benötigt werden, können in dem Einrichtungsgegenstand integriert sein.

Dadurch, dass der Einrichtungsgegenstand eine Einheit aus mehreren Küchengeräten bildet, wird der Einbau in ein Freizeitfahrzeug wesentlich vereinfacht. Die Einheit kann als Ganzes an einer geeigneten Stelle im Innenraum des Freizeitfahrzeugs angeordnet werden. Dies erspart Arbeitsschritte beim Einbau der Küchengeräte in das Freizeitfahrzeug. Außerdem ist eine einzige Abdichtung zwischen dem Einrichtungsgegenstand und der Fahrzeugwand ausreichend.

Das erste der technischen Geräte wird insbesondere eine Kühlvorrichtung umfassen.

Die Kühlvorrichtung kann einen Kühlschrank und/oder einen Gefrierapparat und/oder eine Gefrierkammer aufweisen.

Der Einrichtungsgegenstand weist bevorzugt gemeinsame Versorgungsanschlüsse für die Versorgung von wenigstens zwei der technischen Geräte auf. Dies betrifft insbesondere die Versorgung mit Energie, z.B. elektrischem Strom und Gas. Beispielsweise können jedoch auch gemeinsame Wasserversorgungsanschlüsse für bestimmte Komponenten vorgesehen sein. Sofern eine Entsorgung erforderlich ist, kann entsprechend der Einrichtungsgegenstand mit gemeinsamen Entsorgungsanschlüssen ausgestattet werden. Beispielsweise kann eine gemeinsame Be- und/oder Entlüftung für mehrere der in der Einheit integrierten Komponenten bereitgestellt werden. Die zugeführte Energie wird über ein inneres Leitungssystem oder über direkte Verbindungen zwischen den einzelnen Komponenten innerhalb der Einheit verteilt.

Der Einrichtungsgegenstand weist ein gemeinsames Paneel auf, über das wenigstens zwei der technischen Geräte des Einrichtungsgegenstands bedient werden können. Dies bedeutet, neben einer Platzersparnis, die Möglichkeit einer zentralen Bedienung sämtlicher in der Einheit integrierter technischer Komponenten von einer Bedieneinheit aus. Abgesehen davon ist es denkbar, nicht nur eine gemeinsame Bedieneinheit, sondern auch eine gemeinsame Steuereinheit für mehrere oder alle der Komponenten des Einrichtungsgegenstands vorzusehen.

Zwei oder mehrere der technischen Geräte des Einrichtungsgegenstands können insbesondere übereinander angeordnet sein. So kann z.B. ein Ofen an der Oberseite einer Kühlvorrichtung befestigt sein.

Zwei oder mehrere der technischen Geräte des Einrichtungsgegenstands können in einem gemeinsamen Gehäuse aufgenommen sein. Eine Integration mehrerer Komponenten der Einheit in einem gemeinsamen Gehäuse ist besonders günstig, da dadurch eine gemeinsame Abdichtung der Rückseite des Gehäuses zur Wand des Freizeitfahrzeugs hin ermöglicht wird.

Mehrere der Komponenten des Einrichtungsgegenstands sind miteinander verbunden. Dazu ist ein Schienensystem an einer Komponente der Einheit angebracht, mit der ein an einer zweiten Komponente vorgesehenes entsprechendes Schienensystem durch einen Einschub in Eingriff gebracht wird. Die Verbindung kann bereits vor dem Einbau in das Freizeitfahrzeug durchgeführt werden. Der gesamte Einrichtungsgegenstand wird dann als Einheit eingebaut.

Weitere Merkmale und Vorteile der Erfindung ergeben sich aus der nachfolgenden Beschreibung eines bevorzugten Ausführungsbeispiels. Es zeigen:
- Fig. 1: einen erfindungsgemäßen Einrichtungsgegenstand in einer Frontansicht;
- Fig. 2: den Einrichtungsgegenstand in einer Seitenansicht;
- Fig. 3: den Einrichtungsgegenstand in einer Rückansicht;
- Fig. 4: ein Detail der Gasversorgung des Einrichtungsgegenstands; und
- Fig. 5: eine Seitenansicht eines in ein Freizeitfahrzeug eingebauten Einrichtungs- gegenstands.

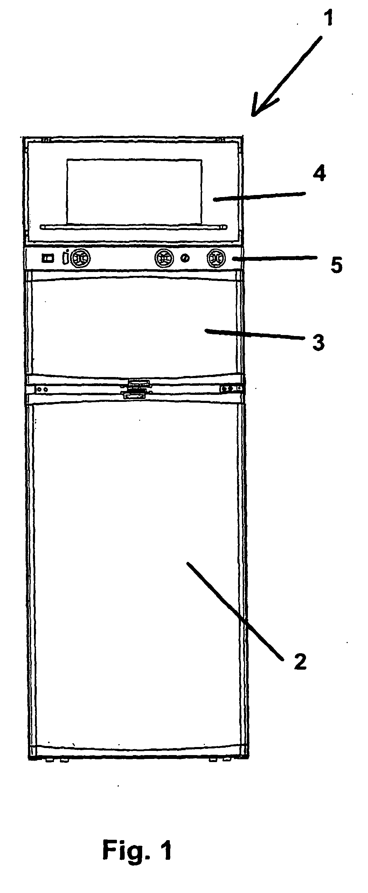

In Fig. 1 ist der erfindungsgemäße Einrichtungsgegenstand 1 dargestellt. Er besteht aus einer Kühlvorrichtung mit zwei Fächern, wobei das Fach 2 den Kühlraum eines Kühlschranks und das Fach 3 ein Gefrierfach bilden kann. Oberhalb der Kühlkomponenten 2, 3 ist ein Backofen 4 angeordnet.

Sowohl die Kühlkomponenten 2, 3 als auch der Backofen 4 werden über ein gemeinsames Bedienpaneel 5 bedient. So können beispielsweise Regler für die Einstellung der Temperatur der Kühlkomponenten 2, 3 als auch für den Betrieb des Ofens 4 vorgesehen sein.

Außerdem können am Bedienpaneel 5 Versorgungsanschlüsse (z.B. eine Steckdose) für die Versorgung externer Geräte mit Energie, z.B. Gas oder Wasser, angebracht werden. Diese Versorgungsanschlüsse werden durch ein entsprechendes Leitungssystem innerhalb des Einrichtungsgegenstands 1 gespeist.

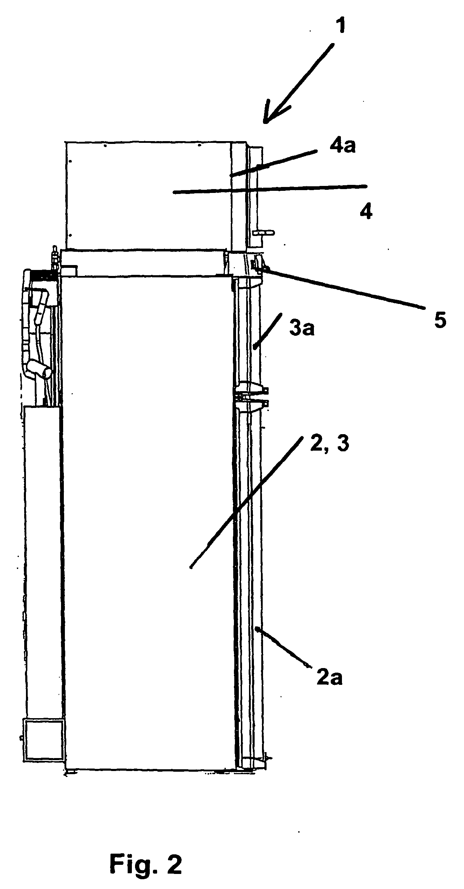

Die Fig. 2 zeigt eine Seitenansicht des Einrichtungsgegenstands 1. Die Kühlkomponenten 2, 3 sind in einem gemeinsamen Gehäuse untergebracht. Die Innenfächer können durch eine Wand oder einen Einsatz getrennt und über separate Türen 2a, 3a zugänglich sein.

Der Ofen 4 ist praktisch auf die Kühleinheit aufgesetzt und an dieser befestigt. Zur Befestigung wird ein Schienensystem mit Kunststoffschienen verwendet, um den Ofen 4 vor dem Einbau des Einrichtungsgegenstands in das Freizeitfahrzeug von einer Seite, beispielsweise von vorne, auf die Kühleinheit 2, 3 (bestehend aus den Kühlkomponenten 2 und 3) aufzuschieben. Zwischen dem Ofen 4 und der Kühlvorrichtung ist eine Isolierung (z.B. Nadelfilzmaterial) angeordnet.

Die Versorgungsverbindungen zwischen den Kühlkomponenten und dem Ofen werden entweder bereits durch die passende Positionierung des Ofens 4 auf der Einheit 2, 3, durch das Anbringen zusätzlicher Außenleitungen, beispielsweise für den Strom, oder durch eine Verbindung zwischen innerhalb der Komponenten 2, 3, 4 vorgesehener Anschlüsse hergestellt.

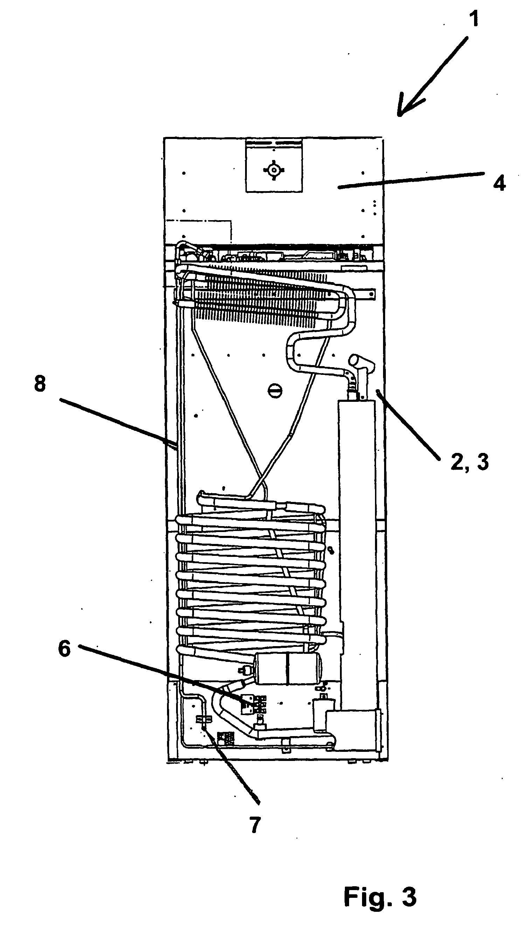

Die Rückansicht gemäß Fig. 3 zeigt wiederum die Kühleinheit 2, 3 und den darüber angeordneten Ofen 4. Sämtliche Komponenten des Einrichtungsgegenstands 1 weisen einen gemeinsamen Anschluss für die Versorgung mit elektrischer Leistung (z.B. 12V-Gleichspannung) auf, der sowohl den Ofen 4 als auch den Verbraucher der Kühleinheit 2, 3 (beispielsweise den Generator eines Absorberkühlschranks) mit Energie versorgt. Wahlweise oder alternativ dazu können die Verbraucher in den Komponenten 2, 3, 4 auch mit Gas versorgt werden, welches durch einen ebenfalls für alle Geräte bzw. Komponenten 2, 3, 4 gemeinsamen Gasanschluss 7 dem Einrichtungsgegenstand zugeführt wird. Zur Verteilung der Energie weist der Einrichtungsgegenstand 1 ein geeignetes Leitungssystem 8 auf, über das die entsprechenden Verbraucher versorgt werden. Auch außerhalb des Gehäuses des Einrichtungsgegenstands 1 können im Rahmen der Erfindung Verbindungen, z. B. Kabel, zwischen den Geräten bzw. Komponenten vorgesehen sein, um die Energie allen Komponenten zuzuführen.

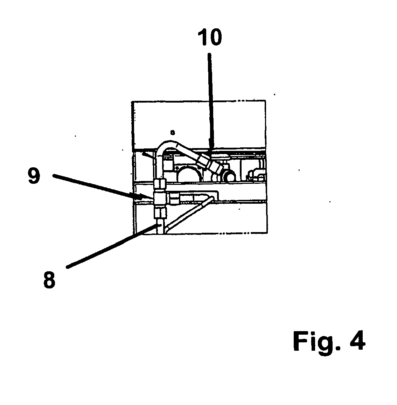

Die Fig. 4 zeigt ein Detail des Leitungssystems 8. Über ein T-Stück 9 kann das Gas über einen Anschluss 10 zum Backofen 4 gelangen und/oder über den anderen Ausgang des T-Stücks zum Kühlschrank 2, 3 geleitet werden.

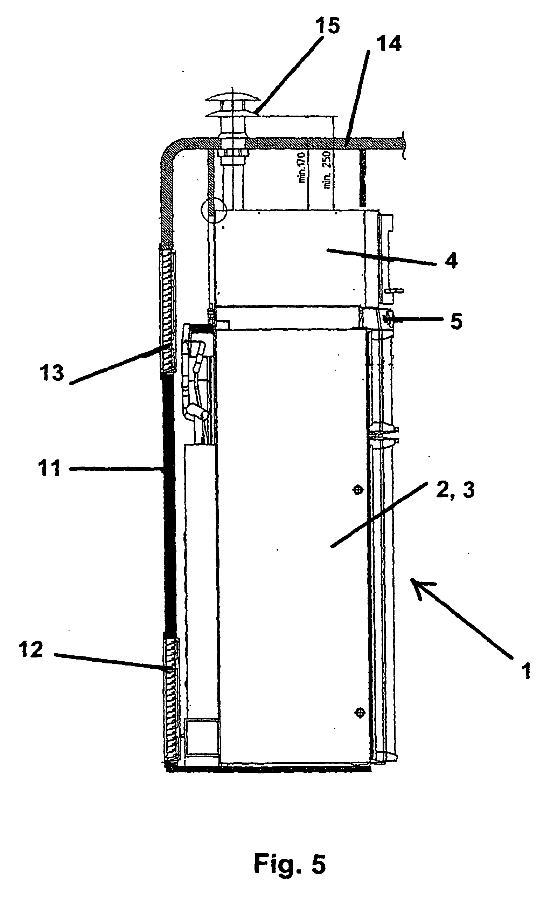

In Fig. 5 ist ein in einem Freizeitfahrzeug eingebauter erfindungsgemäßer Einrichtungsgegenstand 1 dargestellt. Im eingebauten Zustand ist der Einrichtungsgegenstand 1 mit seiner Rückseite gegen eine Wand 11 des Freizeitfahrzeugs ausgerichtet. In der Wand 11 befinden sich in diesem Beispiel Lüftungsöffnungen 12 und 13 sowohl für das Kühlaggregat als auch für den Ofen 4. Im Bereich des Daches 14 ist ein Dachlüfter 15 vorgesehen, über den prinzipiell Verbrennungsgase der verschiedenen Komponenten des Einrichtungsgegenstands 1 abgeführt werden können.

Der Einrichtungsgegenstand 1 weist, wie bereits vorher beschrieben, gemeinsame Energieversorgungsanschlüsse für sämtliche in dem Einrichtungsgegenstand 1 integrierten technischen Geräte auf. Auf diese Weise kann der bereits vor dem Einbau in das Freizeitfahrzeug vormontierte Einrichtungsgegenstand 1 auf einfache Weise eingebaut werden. Insbesondere kann darauf verzichtet werden, das Freizeitfahrzeug mit einer Reihe von Anschlüssen für die unterschiedlichen Geräte auszustatten. Beim Einbau werden lediglich die benötigten Verbindungen zwischen der Installation des Freizeitfahrzeugs und dem Einrichtungsgegenstand 1 hergestellt und dieser anschließend in seine Bestimmungsposition gebracht. Die gesamte Einheit bestehend aus den Kühlkomponenten 2, 3 und dem Ofen 4 können im Einsatz über das gemeinsame Bedienpaneel 5 bedient werden.

## Patentansprüche

1. Einrichtungsgegenstand (1) für eine Küche oder einen Küchenbereich, insbesondere für eine Küche bzw. einen Küchenbereich eines Freizeitfahrzeugs, wobei der Einrichtungsgegenstand (1) eine Einheit bildet, die wenigstens zwei technische Geräte (2, 3, 4) umfasst, wobei wenigstens eines der technischen Geräte (4) ein Ofen (4) ist, und wobei der Einrichtungsgegenstand (1) ein gemeinsames Paneel aufweist, über das wenigstens zwei der technischen Geräte (2, 3, 4) des Einrichtungsgegenstands (1) bedient werden können, und wobei mehrere der technischen Geräte (2, 3, 4) des Einrichtungsgegenstandes (1) miteinander verbünden sind, **dadurch gekennzeichnet, dass** ein Schienensystem an einem technischen Gerät (2, 3, 4) der Einheit angebracht ist, mit dem ein an einem zweiten technischen Gerät (2, 3, 4) vorgesehenes entsprechendes Schienensystem durch einen Einschub in Eingriff bringbar ist.

2. Einrichtungsgegenstand (1) gemäß Anspruch 1, **dadurch gekennzeichnet, dass** das erste der technischen Geräte eine Kühlvorrichtung (2, 3) umfasst.

3. Einrichtungsgegenstand (1) gemäß Anspruch 2, **dadurch gekennzeichnet, dass** die Kühlvorrichtung (2, 3) einen Kühlschrank und/oder einen Gefrierapparat und/oder eine Gefrierkammer aufweist.

4. Einrichtungsgegenstand (1) gemäß einem der vorhergehenden Ansprüche, **dadurch gekennzeichnet, dass** der Einrichtungsgegenstand (1) gemeinsame Versorgungsanschlüsse (6, 7) für die Versorgung von wenigstens zwei der technischen Geräte (2, 3, 4) aufweist.

5. Einrichtungsgegenstand (1) gemäß einem der vorhergehenden Ansprüche, **dadurch gekennzeichnet, dass** zwei oder mehrere der technischen Geräte (2, 3, 4) des Einrichtungsgegenstands (1) übereinander angeordnet sind.

6. Einrichtungsgegenstand (1) gemäß einem der vorhergehenden Ansprüche, **dadurch gekennzeichnet, dass** mehrere der technischen Geräte (2, 3, 4) des Einrichtungsgegenstands (1) in einem gemeinsamen Gehäuse aufgenommen sind.

## Claims

1. A furnishing (1) for a kitchen or a kitchen area, in particular for a kitchen or a kitchen area of a recreational vehicle, respectively, wherein the furnishing (1) forms a unit, which comprises at least two technical devices (2, 3, 4), wherein at least one of the technical devices (4) is an oven (4), and wherein the furnishing (1) encompasses a common panel, via which at least two of the technical devices (2, 3, 4) of the furnishing (1) can be operated, and wherein a plurality of the technical devices (2, 3, 4) of the furnishing (1) are connected to one another, **characterized in that** a rail system is attached to a technical device (2, 3, 4) of the unit, by means of which a corresponding rail system, which is provided on a second technical device (2, 3, 4), can be engaged by means of a slide-in unit.

2. The furnishing (1) according to claim 1, **characterized in that** the first of the technical devices comprises a cooling device (2, 3).

3. The furnishing (1) according to claim 2, **characterized in that** the cooling device (2, 3) encompasses a refrigerator and/or a freezing apparatus and/or a freezing compartment.

4. The furnishing (1) according to one of the preceding claims, **characterized in that** the furnishing (1) encompasses common supply connections (6, 7) for supplying at least two of the technical devices (2, 3, 4).

5. The furnishing (1) according to one of the preceding claims, **characterized in that** two or a plurality of the technical devices (2, 3, 4) of the furnishing (1) are arranged on top of one another.

6. The furnishing (1) according to one of the preceding claims, **characterized in that** a plurality of the technical devices (2, 3, 4) of the furnishing (1) are accommodated in a common housing.

## Revendications

1. Objet d'installation (1) pour une cuisine ou une zone de cuisine, notamment une cuisine ou une zone de cuisine d'un véhicule de loisir, l'objet d'installation (1) formant une unité qui comprend au moins deux appareils techniques (2, 3, 4), au moins l'un des appareils techniques (4) étant un four (4) et l'objet d'installation (1) comportant un panneau commun, par l'intermédiaire duquel deux des appareils techniques (2, 3, 4) de l'objet d'installation (1) peuvent être commandés et plusieurs des appareils techniques (2, 3, 4) de l'objet d'installation (1) étant reliés entre eux, **caractérisé en ce** sur un appareil technique (2, 3, 4) de l'unité est monté un système de coulisses avec lequel un système de coulisses correspondant prévu sur un deuxième appareil technique (2, 3, 4) est susceptible d'être mis en engagement par un insert.

2. Objet d'installation (1) selon la revendication 1, **caractérisé en ce que** le premier des appareils techniques est un dispositif de réfrigération (2, 3).

3. Objet d'installation (1) selon la revendication 2, **caractérisé en ce que** le dispositif de réfrigération (2, 3) est un réfrigérateur et/ou un congélateur et/ou un compartiment de congélation.

4. Objet d'installation (1) selon l'une quelconque des revendications précédentes, **caractérisé en ce que** l'objet d'installation (1) comporte des raccordements d'alimentation (6, 7) communs pour alimenter au moins deux des appareils techniques (2, 3, 4).

5. Objet d'installation (1) selon l'une quelconque des revendications précédentes, **caractérisé en ce que** deux ou plusieurs des appareils techniques (2, 3, 4) de l'objet d'installation (1) sont superposés.

6. Objet d'installation (1) selon l'une quelconque des revendications précédentes, **caractérisé en ce que** plusieurs des appareils techniques (2, 3, 4) de l'objet d'installation (1) sont réceptionnés dans un boîtier commun.
